# EUROPEAN PATENT SPECIFICATION

(11) **EP 2 864 991 B1**
(45) Date of publication and mention of the grant of the patent: **26.07.2023**
(21) Application number: 13735223.3
(22) Date of filing: 20.06.2013
(51) Int. Cl.: H01F 7/02, E05B 47/00

(54) **MECHANISM FOR CONNECTING AND DISCONNECTING TWO PARTS**
MECHANISMUS ZUM VERBINDEN UND TRENNEN VON ZWEI TEILEN
MÉCANISME DE CONNEXION ET DE DÉCONNEXION DE DEUX PIÈCES

(30) Priority: 20.06.2012 GB 201210900; 16.09.2012 GB 201216514; 10.12.2012 GB 201222144; 14.01.2013 GB 201300638; 14.01.2013 GB 201300555; 14.01.2013 GB 201300551; 16.04.2013 GB 201306870; 26.05.2013 GB 201309452
(43) Date of publication of application: 29.04.2015
(73) Proprietor: Inelxia Limited, Oxfordshire OX14 5RW (GB)
(72) Inventor: CHAIZY, Patrick André, Abingdon, Oxfordshire OX14 5RW (GB)
(74) Representative: Marks & Clerk LLP
(86) International application number: PCT/EP2013/062948
(87) International publication number: WO 2013/190070

(56) References cited:
- WO-A2-2012/160195
- DE-A1-102007 058 188
- DE-C- 145 325
- US-A- 3 596 958
- US-A1- 2010 308 605

## Description

### Technical Field

The present invention relates to a mechanism for connecting and disconnecting two parts.

### Background

Various magnetic fixing arrangements are described in the following documents: US2011 /001025 A1, WO 2012/160195 A2 (application number WO2012EP59870), DE145325 C, US3596958 A.

DE 10 2007 058 188 A1 (family member of US2011/001025 A1) discloses a mechanism for connecting and disconnecting two parts according to the preamble of present claim 1. Further mechanisms for connecting and disconnecting two parts are disclosed in WO 2012/160195 A2 and US 2010/0308605 A1.

### Summary

According to the present invention there is provided a mechanism for connecting and disconnecting two parts, the mechanism comprising a first component (100) having a first magnetic part (101) for integration with or attachment to a first of said parts, a second component (102) being integral with or attached to a second of said parts, and a third component (103) having a second magnetic part (106), the third component (103) being moveable relative to said first component (100) in a given direction to effect switching between connection and disconnection of the first and second components by causing magnetic interaction of the first and second magnetic parts to effect relative movement of those magnetic parts, wherein, when and while connected, the first and second components are able to move relative to one another in said given direction. The mechanism is characterised by further comprising a fourth component (104) for engagement with said first component (100) to prevent movement of the third component (103) relative to the first component (100) in said given direction as a result of relative movement of the first and second components in said given direction, thereby to prevent unintended disconnection of the first and second components.

The given direction may be a rotational direction. At least one of the magnetic parts may be moveably retained by a guide such that said interaction of the magnetic parts causes a movement of the magnetic part along the guide to a position in which the third component is mechanically secured to the first component. Said first magnetic part may be moveable relative to the first component, under the effect of the second magnetic part, in order to engage said fourth component with said first component. The moveable magnetic part may be moveable in a direction that is substantially parallel or substantially perpendicular to the axis of rotation.

The third or fourth component may slide inside or around the first and second components and, when connected to the first component, that third or fourth component straddles the first and second component. One of the magnetic parts may slide inside or around the other magnetic part, and the mechanism may further comprise a fifth component acting as a guide for the sliding magnetic part such that, when the magnetic parts are engaged, the sliding magnetic part straddles the fifth component and the other magnetic part.

The mechanism may further comprise mechanical lock for locking and unlocking the first and third components with respect to one another by said relative motion in the given direction. The mechanical lock may comprises one or more of:
clip and clip engagement features formed on the first and third components;
interengaging rails formed on the first and third components;
further magnetic components moveable in a direction different from a direction in which one of said magnetic parts is able to move..

Said first and second magnetic parts may comprise oppositely oriented dipoles.

### Brief Description of the Drawings

Figure 1 to Figure 2 illustrate the general principle of linear push-pulls;
Figure 3 illustrates the general principle of restricted linear push-pulls;
Figure 10 to Figure 11 illustrate the general principle of multiple fixing surfaces;

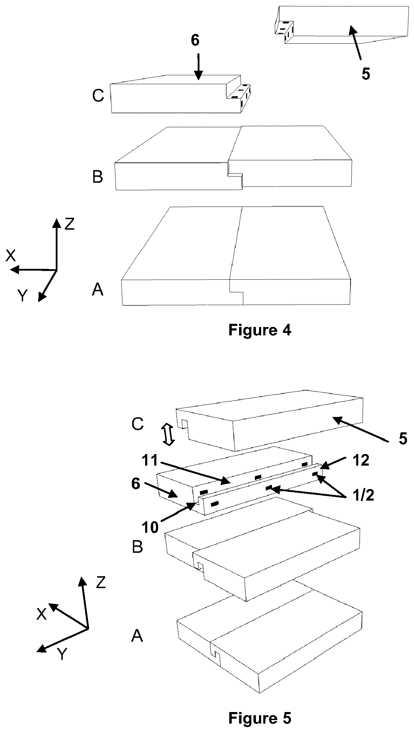

Figure 4 illustrates the general principle of perpendicular push-pull longitudinal blocking;
Figure 5 to Figure 9 illustrate the principle of rail longitudinal blocking;

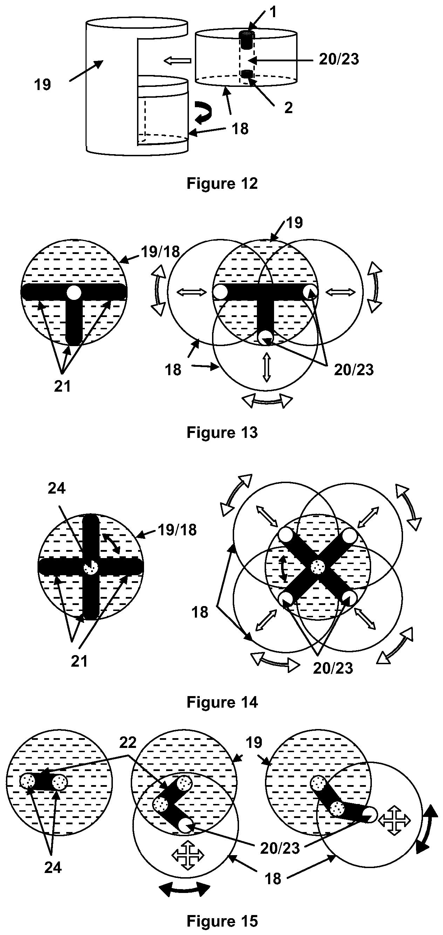

Figure 12 to Figure 15 illustrate the use of push-pull in the case of sliding platforms;

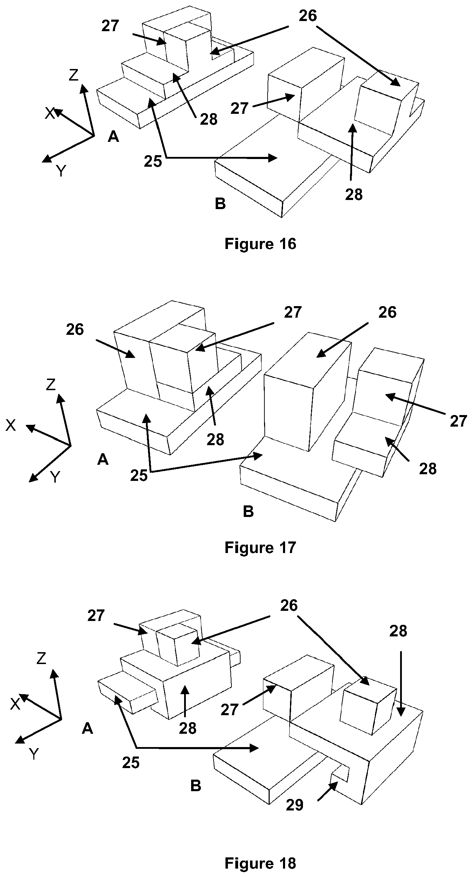

Figure 16 to Figure 22 illustrate the multi-layer principle;

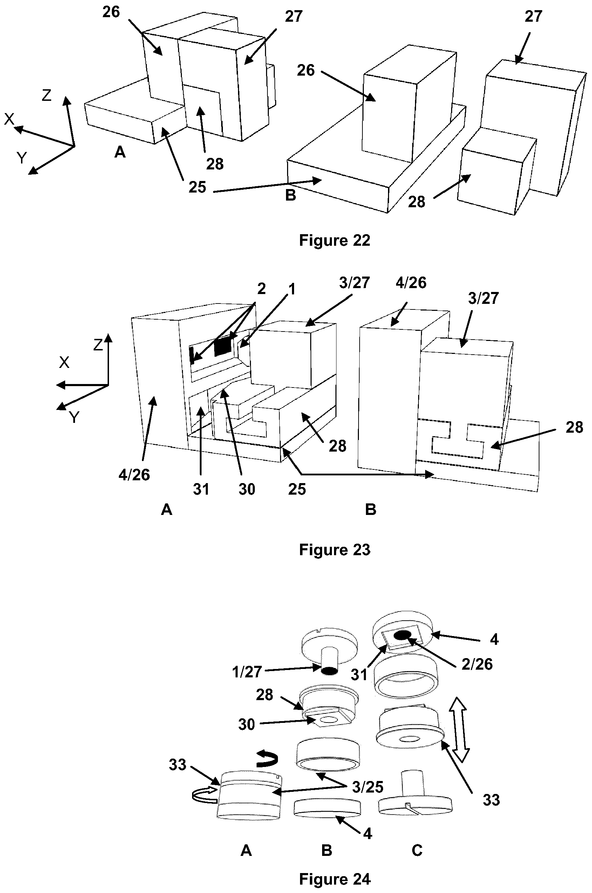

Figure 23 to Figure 30 illustrate various possible multilayer mechanisms;

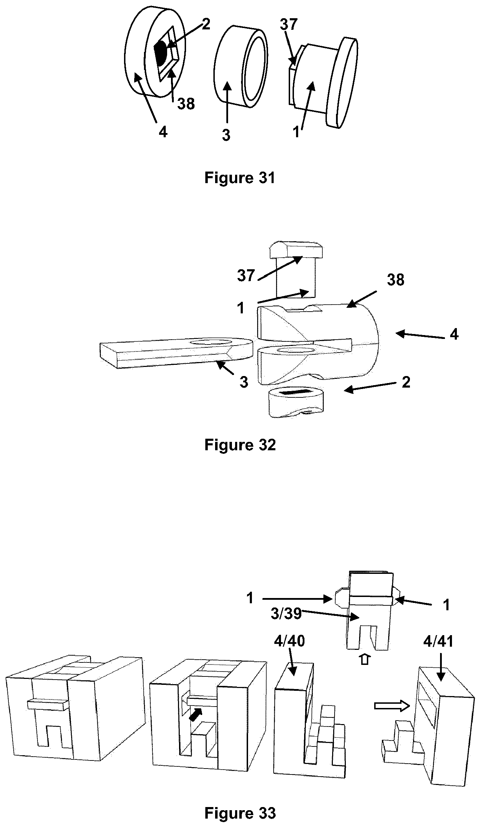

Figure 31 to Figure 32 illustrate various mechanisms of possible alternative to the multilayer principle;
Figure 33 to Figure 38 illustrate various possible mechanisms of the multi-part principle; and

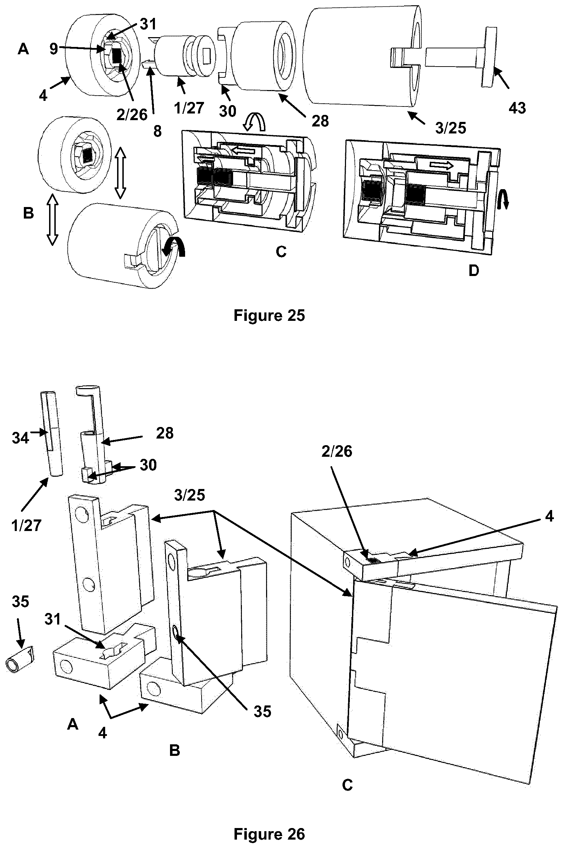

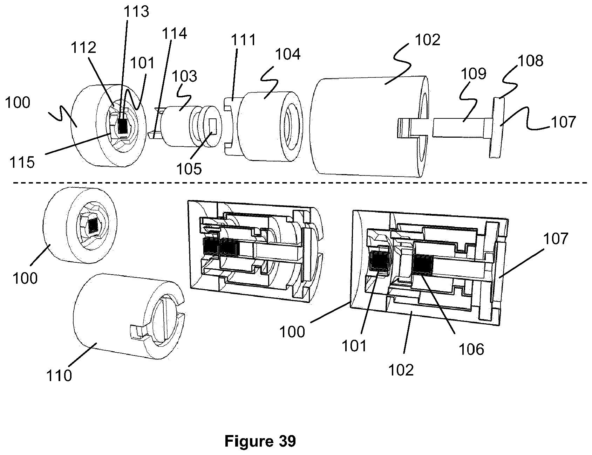

Figure 39 illustrates the multilayer mechanism of Figure 25, but with alternative numbering.

Embodiments of a mechanism according to the present invention are shown in Fig.39/25 and 23.

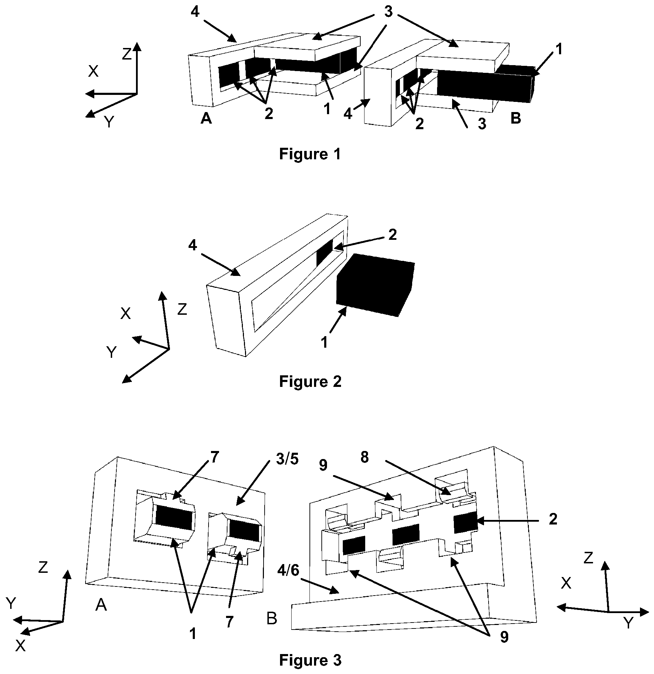

The mechanisms described in connection with Figures 1 to 22, 24 and 26 to 38 do not form part of the present invention defined by the appended claims.

### Detailed Description

For the sake of clarification, Figure 39 illustrates a multilayer mechanism of Figure 25 (described further below), but with an alternative numbering system. The following description of the mechanism will be helpful in understanding the description of Figure 25 and also of further mechanisms.

The illustration above the dotted line in Figure 39 is an exploded view of the embodiment. It illustrates five components, namely a fixed first part 100, e.g. which might be fixed to a wall, having a first fixed magnetic part 101. This first magnetic part 101 is located within a recessed socket 113, with the magnetic part being fixed within the guide. A second component 102 is a hollow cylinder configured to accommodate a third part 103 and a fourth, locking part 104, where the locking part is also cylindrical and is located, substantially coaxially, between the second and third parts. The third part comprises a central passage 105 having a generally square cross-section. A second magnetic part 106 is secured within this passage 105.

The embodiment comprises a fifth part 107 having an enlarged head 108 and a shaft 109 have a square cross-section such that the shaft can be located within the passage 105 of the third part. Rotation of the fifth part 107 therefore results in rotation of the third part 103 relative to the first part 100. The first and second magnetic parts each comprise a single dipole magnet, the magnetic axes being aligned perpendicular to the rotational axis of the first and second parts.

The second, third, fourth and fifth parts are assembled into a single unit 110 that can be engaged with the first part 100. When the assembled unit and the first part are brought together, a pair of lugs 111 projecting from the end of the fourth part 104 locate within respective recesses 112 formed in the first part. The engagement of the lugs with the recesses prevents the fourth part from rotating relative to the first part. By rotating the head of the fifth part 107, a user is able to rotate the third part 103 relative to the first part 100 (and the fourth part 104). This action can be used to align the magnetic dipoles of the magnetic part 101, 106 such that a magnetic attraction occurs. As a result, the second magnetic part is pulled towards the first magnetic part 101, in turn pulling the third part 103 towards and into engagement with the first part 100. The third part slides within the fourth part 104 during this step.

In order to prevent the assembled unit 110 being pulled away from the first part 100, overcoming the magnetic attraction force, a set of latches 114 project from the end of the third component 103 and penetrate into a generally circular recess 115 formed in the first component 100. Rotation of the third component 103 causes these latches to locate behind respective lips formed around the circumference of the recess 115, preventing the assembled unit from being pulled away from the first part.

In this configuration, as has already been noted, the fourth component 104 cannot rotate relative to the first component 100. However, the second component 102 is free to rotate around the fourth component 104. Moreover, the third component 103 can be rotated in a counter-direction in order to rotate the second magnetic component 106 and release the latches 114 from behind the holding lips. Such rotation will cause a repulsion of the two magnetic components, allowing the assembled unit 110 to be removed from the first component 100.

It will be apparent that the advantage of the embodiment of Figure 39 is that the fourth part 104 effectively decouples the second part 102 from the third part 103. Rotation of the second part has no effect on the third part and in particular will not cause any rotation, and therefore release of, the third part from the first part.

An modification to this mechanism replaces the recesses 115 with recesses that are configured to snap-in the latches 114 during attachment of the unit 110. The mechanism is such that, as the unit is brought into close proximity with the first part 100, the magnetic parts self-align, rotating the third part 103 to a position in which the latches 114 are properly aligned with the recesses. The magnetic force is sufficient to pull the third part 103 towards the first part, causing the latches 114 to snap into place behind respective lips. When the third part is subsequently rotated to a position in which the magnetic parts are mis-aligned and the latches are no longer caught by the lips, the repulsion force pushes the third and first parts apart.

Hereafter, the term "push-pull" designates a device that is made of first (**1**) and second (**2**) magnetic components moveable with respect to each other, both having magnetic properties so that relative rotational or linear motion, hereafter called the "actuation motion", causes one of the components, hereafter it will always and arbitrarily be the first magnetic component (**1**), to move between a locking position in which that first component (**1**) straddles two guides, (**3**) and (**4**), made of antimagnetic material (i.e. made of a material that is magnetically neutral such as plastic, wood, aluminium etc...), and an unlocking position in which that does not straddle the two guides. The straddling mechanically prevents the two guides, (**3**) and (**4**), to move in a folding motion or in a motion that is not parallel to the direction of motion of the first component (**1**) when it moves from a locking to an unlocking position. Hereafter, this latter motion is called the "locking/unlocking motion". Such push-pulls offer various advantages such as aesthetics (e.g. the mechanisms can be totally hidden from view), haptic, rapidity/simplicity of use, safety, cost reduction (e.g. by reducing structure assembling/disassembling times), entertainment, novelty/fashion, improve quality, etc... The trade domains that can benefit from such push-pulls devices include toys, furniture, bathroom equipment, boxes (e.g. jewellery cases), bags, clasps, scaffolding, building frames, panel frames, item holders, fastening devices, lifting or pulling mechanisms etc... The mechanical strength that prevents the guides to move relatively to each others, in a sheer or folding motion, is a function of the material that is used to straddle the guides. This material can be the material that is used to make the magnet. It can also be the one that is attached to the magnets (e.g. to wrap the magnets) and that moves with the magnets. Thus "magnetic component" designates both the magnet(s) and their surrounding material. All push-pulls described in this document can be manufactured first and, later, be integrated (e.g. screwed, glued etc...) into other parts; they can be bespoke or standardised and potentially sold in shops as stand alone products. They can also be manufactured at the same time as the other parts so that no later integration is required. The magnetic force can be used only to lock or to unlock the system (as opposed to lock and to unlock the system). In that latter case, an additional force is required to unlock or lock the system, respectively. This additional force can be the same force as the one used by the actuation motion or a separate one. If a separate force is used then the latter must be strong enough to move (**1**) from the locking (unlocking) position to the unlocking (locking) position and weak enough not to prevent the magnetic force between (**1**) and (**2**) to move the first component (**1**) from its unlocking (locking) position to its locking (unlocking) position. This means that the actuation motion of the (**1**) and (**2**) only needs to modulate the magnitude of the magnetic force, i.e. not its direction. This separate force can be generated by a spring or by another magnet/paramagnetic material acting as a spring. If the actuation motion force is used then the locking/unlocking motion of (**1**) is mechanically actuated. This means that (**1**), (**2**), (**3**) and (**4**), are shaped so that the actuation motion will move (**1**) on sections of (**4**) and/or (**2**) that are inclined so that the actuation motion results in an increase of the distance between (**1**) and (**2**) (e.g. see Figure 2 for a linear motion). In that case the magnetic force does not have to be modulated or its direction reversed. The magnetic properties of (**1**) and (**2**) depend on whether the magnetic force needs to be modulated or its direction changed. If the magnetic force direction is reversed then (**1**) and (**2**) can both contain magnets with an adequate orientation of their magnetic poles. Alternatively, one component contains a magnet and the other one a patchwork of paramagnetic and diamagnetic materials. If the force is merely modulated then, typically, one component can contain a magnet and the other one a patchwork of paramagnetic and antimagnetic materials. Note that a paramagnetic material is only attracted when in the presence of an externally applied magnetic field, that a diamagnetic material is repelled by magnetic fields and that an antimagnetic material is impervious to the effect of a magnetic field. Linear actuation motion means that to unlock the push-pull, (**1**) slides linearly relatively to (**2**) and parallel to an orientation that is not parallel to the locking/unlocking motion orientation. Rotational actuation motion designates a linear actuation motion with a first component (**1**) path wrapped around an axis that is not parallel to the linear actuation motion orientation. This wrapping axis becomes the axis of rotation and, depending on the embodiments, can go or not through (**1**). Hereafter, the terms "parallel rotational" and "perpendicular rotational" refer to rotational push-pulls where the rotational axis is, respectively, parallel and not-parallel to the locking/unlocking motion direction. Note that for parallel rotational push-pulls, the ability of (**1**) to rotate relatively to (**3**) can be a function of its linear position along (**3**) as illustrated in Figure 13 of PCT/EP2012/059870. The guiding can be "internal", "external" or "mixed" for both linear and rotational actuation motions. The guiding is said to be "internal" if the guide penetrates, partially or totally, (**1**) and/or (**2**). It is said to be "external" if the magnetic component penetrates, partially or totally, the guide. The guiding is said to be "mixed" if it is internal on a section of the first component (**1**) path and external on another section; see PCT/EP2012/059870 for examples of internal, external and mixed guiding for rotational push-pulls. In addition (**1**) and/or (**2**) may or not slide relatively to (**3**) and/or (**4**) during the execution of the actuation motion. In all the figures below the following convention is used: the surfaces of the guides and of the parts are totally or partially white while the surfaces of the material with magnetic properties are all black. Figure 1 illustrates the principle of a linear push-pull (i.e. a push-pull with a linear actuation motion). The linear actuation and locking/unlocking motions of (**1**) are, respectively, parallel to the Y and X directions. Guide (**4**) contains at least 2 magnets. The orientations the magnetic dipoles of all the magnets are parallel to (**1**) one, i.e. to the X direction. However, the directions of the magnetic dipoles inside (**4**), alternate along the Y direction. Thus, in Figure 1.a the push-pull is locked. In Figure 1.b (**1**) moved in the Y direction and is now in front of a magnet of (**2**) of which magnetic dipole direction is opposite to the previous one. Therefore (**1**) is now pushed away from (**2**) and the push-pull is unlocked; i.e. (**3**) and (**4**) can now move parallel to the Z orientation in opposite directions. Note that, in this illustration, (**3**) does not move relatively to (**4**) in the Y direction during the actuation motion although it could (e.g. see Figure 3); only (**1**) does. Note that other magnetic configurations producing the same inversion of the magnetic force as a result of a linear actuation motion of the first component are possible. For instance, the orientation of the magnetic dipoles of (**1**) and (**2**) could be perpendicular to the locking/unlocking orientation. In Figure 2, as opposed to Figure 1, the magnetic force direction is not reversed and the additional force is the actuation motion force. This can be seen by the bevelled shape of the duct and of the surface of (**1**) of which normal has one of its vector components in the Y direction. Component (**1**) is attracted by (**2**) if left free to position itself. During the actuation motion (**1**) is moved along the +Y axis. As a result, the bevelled shape pushes (**1**) outside (**4**); for simplicity (**3**) has not been represented.

Hereafter, the term "Restricted Linear Push-Pull" (RLPP) applies on a linear push-pull as described above but of which (**1**) cannot slide relatively to (**3**) in a direction that is parallel to the actuation motion. The push-pull can use internal, external or mixed guiding and the magnetic components can be used to lock and unlock the push-pull as well as to lock or unlock the push-pull. Such linear push-pulls, restricted or not, can be used, for instance, to attach a panel of a dolls house on a main frame, a removable tray on the legs of baby highchairs (when not use as a table), a lid on a box, etc... Figure 3 illustrates the basic principle of Restricted Linear Push-pull. It is similar to Figure 1. The key difference between Figure 1 and Figure 3 is that in Figure 3 (**1**) can slide relatively to (**3**) only in directions that are parallel to the locking/unlocking motion direction (i.e. the X axis). One or more set of Restricted Linear Push-pulls can be used to interlock two parts, (**5**) and (**6**), together. Several sets are used in Figure 3 to Figure 5. There are two sets in Figure 3 that share (**2**). Figure 4, Figure 5, Figure 10 and Figure 38 involve Restricted Linear Push-pulls. In order to simplify these figures (**1**) and (**2**) as well as (**3**) and (**4**) are not represented in details. They are symbolised by black rectangles. Each black rectangle can represent the first (**1**) or second (**2**) magnetic component. In practice, for the Restricted Linear Push-pull to work, if a black rectangle is (**1**) then the opposite black rectangle, on the other part, must be (**2**); or vice versa. In addition, for these figures, sub-figures A, B and C represent, respectively, the case when parts (**5**) and (**6**) are attached, i.e. when the Restricted Linear Push-pulls are locked, when the parts have been moved relatively to each others in a direction that is parallel to the actuation motion direction (at this stage the Restricted Linear Push-pulls are unlocked) and, finally, when the parts have been moved in the direction that is not parallel to both the actuation and locking/unlocking motion directions.

Hereafter, the term "Hook Longitudinal Blocking" designates a push-pull of which (**1**), when locked, is prevented from moving in a direction that is parallel to the locking/unlocking motion by hooks. In addition, these hooks automatically release their grip during the actuation motion and do not prevent the locking of the push-pull. These hooks can be located on (**1**) and grab (**2**) and/or (**4**). They can also be located on (**2**) and/or (**4**) and grab (**1**). Such hooks can move or bent to allow the locking of the push-pull but need to remain in their gripping position when locked. In order to achieve the latter, they can use the elastic properties of the material (as in Figure 3), springs or magnets acting as springs. Figure 3 is a perspective view of an example of a mechanical Hook Longitudinal Blocking system for a linear push-pull (the principle would remain the same for rotational push-pulls). The protruding parts (**7**), at the top and bottom of the first magnetic components (**1**), pushes up or down the hooks (**8**) when the push-pull is being locked by moving closer the parts (**5**) and (**6**) parallel to the X axis. Once locked, hooks (**8**) have grabbed the protruding part (**7**) and prevent the two parts, (**5**) and (**6**), to move away from each other in a direction parallel to the X axis. However, after the actuation motion has been executed, the protruding parts (**7**) are now in the grooves (**9**) and parts (**5**) and (**6**) can move relatively to each other in a direction parallel to the X axis.

Hereafter, the term "Perpendicular Push-Pull Longitudinal Blocking" designates a system that is made of two parts, (**5**) and (**6**), which are mechanically coupled by two sets of at least one push-pull of any kinds, the locking/unlocking motion directions of the push-pulls of one set are not all parallel to the ones of the second set and the actuation motion directions of the push-pulls of both sets are all parallel. Note that some push-pulls of one set may share their second magnetic component (**2**) with some push-pulls of the second set. Figure 4 is a perspective view of an example of such a Longitudinal Blocking system in the particular case of a Restricted Linear Push-pull. Two sets of 3 Restricted Linear Push-pulls are mounted on two perpendicular surfaces of parts (**5**) and (**6**). The locking/unlocking motion direction is parallel to the Z axis for one set of push-pull and to the X axis for the second set. Thus, when locked, the two parts, (**5**) and (**6**), can only move relatively to each other in directions that are parallel to the actuation motion direction (Y axis). Note that Perpendicular Push-Pull Longitudinal Blocking for rotational push-pulls has been introduced in PCT/EP2012/059870.

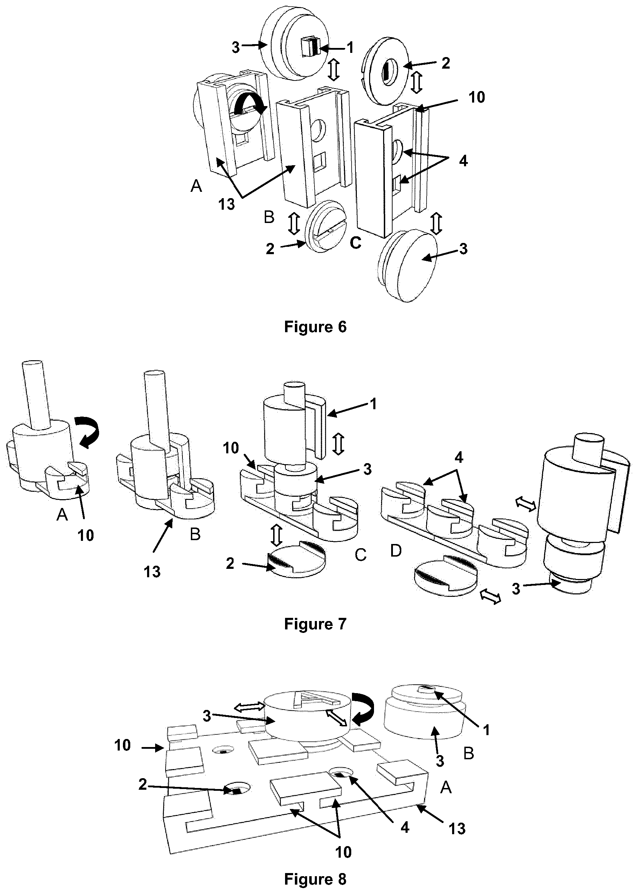

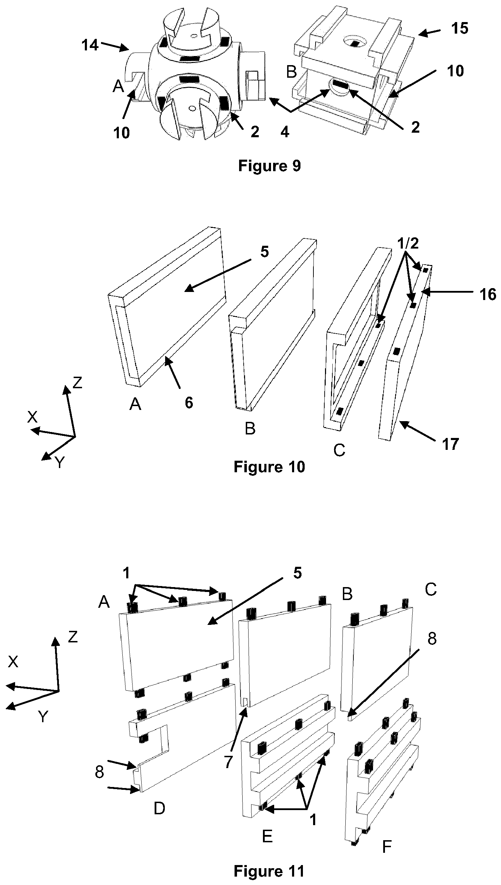

Hereafter, the term "Rail Longitudinal Blocking" designates push-pulls of which guides (**3**) and (**4**) are shaped so that they interlock by sliding relatively to each others in a direction that is not parallel to the locking/unlocking motion, hereafter called the interlocking motion direction, so that, when locked, they hook each others in a way that they cannot move in a direction that is parallel to the locking/unlocking motion direction and so that, when locked, the straddling of (**3**) and (**4**) by (**1**) prevents (**3**) and (**4**) to move in opposite directions parallel to the interlocking motion orientation. Guides (**3**) and (**4**) disengaged by executing the actuation motion and by moving them in opposite directions parallel to the interlocking motion orientation (or to one of them if there are more than one possible interlocking motion orientations). Figure 5 to Figure 9 are perspective views of examples of such a longitudinal blocking system. In these figures, the black circular arrows represent the actuation motions, the straight white arrows represent the relative motions of the parts when unlocked and the black surfaces represent (**1**) and (**2**). At least one of the guides has a section shaped as a rail (**10**). Figure 5 involves Restricted Linear Push-pulls. In Figure 5 the sets of Restricted Linear Push-pulls are positioned on both the internal (**11**) and external (**12**) surfaces of the rail (**10**). This is not mandatory. A set on the internal surface (**11**) of part (**5**) and on the external surface (**12**) of part (**6**), or vice versa, would work as well. The actuation and locking/unlocking motion directions are parallel to, respectively, the Y and X axes. Figure 6 to Figure 9 involve rotational push-pulls and describe a distribution of a plurality of guides (**3**) or (**4**). These guides can have a 1, 2 or 3 dimensional distribution. The distribution is 1D, e.g. as in Figure 6 and Figure 7, if they are distributed on a straight or not line inside a part (**13**). It is 2D, e.g. as in Figure 8, and 3D, e.g. as in Figure 9, if they are distributed on the surface of a part (**13**) that is respectively open (e.g. a plan) and closed (e.g. a cube or a sphere). Other mechanisms do not have to consider such a distribution of guides, i.e. they can consider one guide only. In Figure 6 (**1**) can be locked at any of the guide (**4**) positions. Figure 6.a shows the push-pull locked while Figure 6.b and Figure 6.c show the push-pull unlocked from opposite view points. In Figure 6 (**4**) can be circular or not. If it is circular then both components (**1**) and (**2**) can rotate relatively to (**4**). If both (**4**) and a large enough (**1**) are not circular (i.e. square in Figure 6) then only (**2**) can. Figure 7 is similar to Figure 6 but it uses internal guides as opposed to external ones. In Figure 7 (**1**) rotates around (**3**). It does not have to be the case as long as (**1**) and (**2**) can rotate relatively to each other. In both Figure 6 and Figure 7 component (**2**) moves with (**1**). It does not have to, as illustrated in Figure 8. However, this illustrates the fact that a multi-position system does not necessarily need to have as many components (**2**) as there are locking positions, as it is the case for instance in Figure 8 and Figure 9 (since (**2**) can move with (**1**)). In Figure 8 to Figure 9 neither (**1**) nor (**2**) can rotate inside, respectively, (**3**) and (**4**). This does not have to be the case for all mechanisms. In addition, the push-pull is a parallel rotational push-pull. Other mechanisms can consider linear or perpendicular rotational push-pulls. In Figure 8 (**3**) can move freely or be locked at certain locations depending on the relative orientation of (**1**) and (**2**). Figure 8.b is guide (**3**) of Figure 8.a upside down in order to show (**1**). In this figure, component (**1**) pops out of (**3**) as if it was attracted by (**2**). Figure 9 illustrates a 3D multi-position system for a rotational push-pull with, respectively, internal (**14**) and external (**15**) guides. They are the equivalent of Figure 7 and Figure 8 wrapped around a cube. There could be more than one (**2**) on each face of the cube. In addition, if Figure 7 and Figure 8 had been wrapped around a disc or a sphere then (**1**) and (**3**) could go from one (**2**) to another without the need to remove them from the rail (**10**).

Hereafter, the term "Multiple Fixing Surfaces" designates a system that comprises two parts, (**5**) and (**6**), the first part is attachable to the second part along at least two fixing surfaces, (**16**) and (**17**), and at least one of the fixing surfaces is attached to the other part by at least one push-pull. Figure 10 is a perspective view of an example of "Multiple Fixing Surfaces" using Restricted Linear Push-pull with external guiding. The actuation motion and the locking/unlocking motion are parallel to, respectively, the Y and X axes. Figure 11 shows various examples of how to implement part (**5**) as well as the diversity of the ways of interlocking parts (**5**) and (**6**). Part (**5**) of Figure 11.a is the one used in Figure 10. Note that in Figure 11 part (**5**) uses only components (**1**) and (**3**). This was only to make the figure more explicit. It could have held only components (**2**) or a patchwork of components (**1**) and (**2**). Multiple fixing systems are relevant for any type of push-pulls. For instance, if they were linear push-pull but not Restricted Linear Push-pulls then step B of Figure 10 would be replaced by a motion of (**1**) relative to (**3**) in the direction of the actuation motion; i.e. part (**5**) would not need to move relatively to part (**6**) in the actuation motion direction.

Hereafter, the term "sliding platform" designates a system made of a first platform (**18**) and of another platform or housing (**19**), where (**18**) can hover parallel to the surface of (**19**) in one or more directions while still mechanically coupled to the latter and where (**18**) can be locked at least (e.g. see the 1D distribution discussed in the "rail longitudinal blocking" section above) at one given location, relatively to (**19**), by a push-pull of any kind. The mechanical coupling can be realised in various ways. A part (**20**) can slide inside guide(s) (**21**) or be attached at the extremity of an articulated arm (**22**). It is fixed on one of the two platforms while (**21**) or (**22**) are attached to the other platform. Guides (**3**) or (**4**) can be located in (**18**) and (**19**) only; i.e. not in (**20**), (**21**) or (**22**). They can be also located in (**20**) and (**21**) or (**22**) only, i.e. not in (**18**) or (**19**), or one can be located both in (**18**) or (**19**) and the other one in (**20**), (**21**) or (**22**). In any case the degree of freedom of motion of part (**20**) relatively to (**21**) or (**22**) must be such that it does not prevent the actuation motion to take place. Figure 12 to Figure 15 describe examples of the sliding platform principle. In these figures, (**18**) and (**19**) are a circular drawer and its housing. This mechanism uses two rotational push-pulls located on a central axis (**23**) going through the centre of the circular surface of the drawer. This central axis (**23**) is parallel to the locking/unlocking motion and is also part (**20**). There are two push-pulls at the top and bottom of (**23**); there could be only one. Figure 13 to Figure 15 are see-through top down views of Figure 12 that exposes the various parts and their dynamic. Figure 13 to Figure 14 involves guides (**21**) while Figure 15 involves an articulated arm (**22**). In these figures, (**21**) and (**22**) are not telescopic although they could be. Such telescopic systems could be used, for instance, to move drawer (**18**) fully out of (**19**). In Figure 13 guides (**21**) do not rotate around a pivot. In that case guides (**21**) will force (**18**) to move in predetermined straight lines in one or more directions; i.e. 3 in the figure. This means that Figure 13 can represent either 3 drawers (**18**), positioned one above each others, which have been pulled in 3 different directions and/or the 3 different directions (**18**) can be pulled out. Figure 14 illustrates the case when (**18**) slide in one or more guides (**21**) that can rotate around a pivot (**24**).

This means that (**18**) can be pulled in various directions but always in the same direction as (**21**). In Figure 12 to Figure 15 the single headed black circular arrow indicates the actuation motion. The double headed white circular arrows indicate, when unlocked, the rotation of (**18**) around (**20**)/(**23**). The double headed black circular arrows indicate the rotation of the guides (**21**) relatively to a pivot (**24**). The double headed straight white arrows indicate the direction of the motion of (**20**)/(**23**) relatively to its guide (**21**). The small white circle illustrates the position of (**20**)/(**23**). The dotted circle (**24**) illustrates the pivots (**24**) of (**21**) and (**22**). Figure 12 to Figure 15 describe rotational push-pulls but linear push-pulls could be used as well. A linear push-pull could be used, for instance, for a non-circular drawer. When locked, the push-pull would prevent the drawer to move, for instance, in all the directions but the actuation motion one. To move the drawer, the drawer needs to be pulled (as opposed to be rotated in Figure 12 to Figure 15), first, in the actuation motion direction to unlock the push-pull and then move in whatever directions that are allowed. Note that mechanisms pushing (**18**) out of (**19**), more or less strongly, when unlocked, can be added for convenience of use.

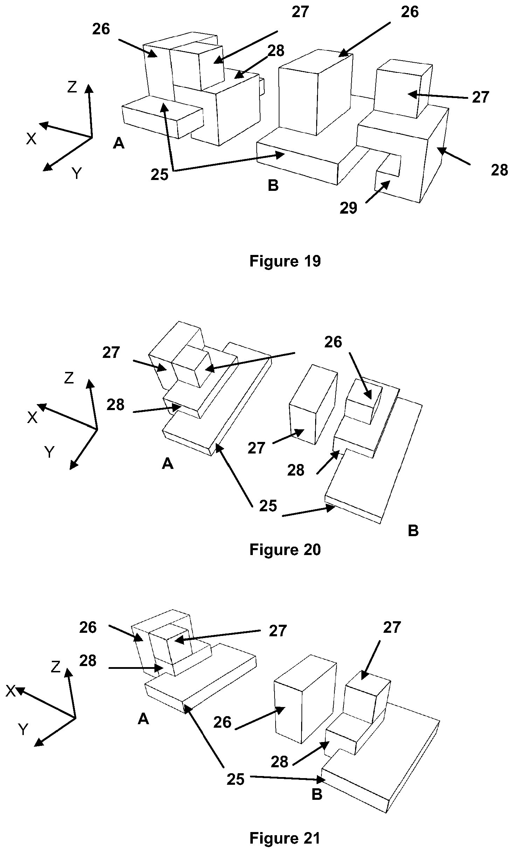

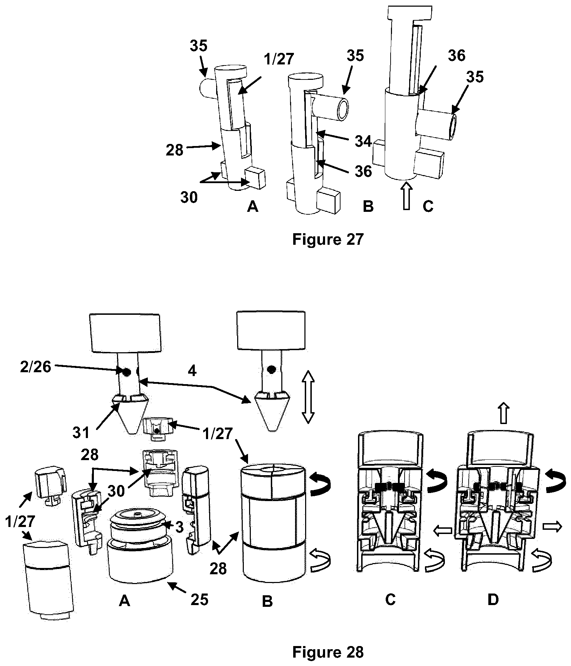

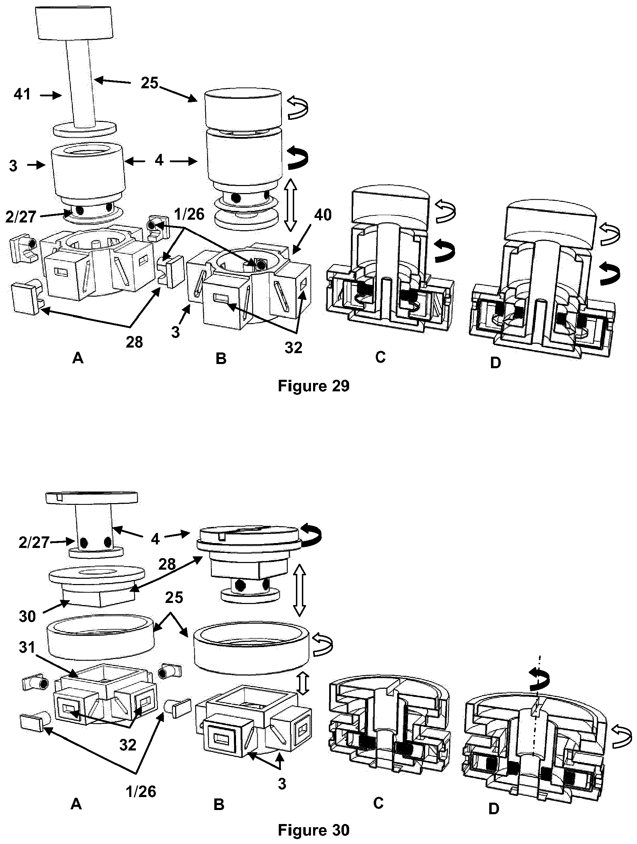

The term Multi-Layers Push-pull designates a system made of at least four parts. If a first part, hereafter called the sliding part (**25**), moves relatively to a second part, hereafter called the reference part (**26**) then the sliding part (**25**) can also move by friction a third part, hereafter called the dragged part (**27**), in the same direction as its direction of motion. To prevent this a fourth part, hereafter called the additional part (**28**), which cannot be dragged by friction by the sliding part (**25**), is inserted between the sliding part (**25**) and the dragged part (**27**). Such an additional part (**28**) acts as a mechanical insulation layer between the sliding (**25**) and the dragged parts (**27**). Some of these four parts can be parts (**1**), (**2**), (**3**) and/or (**4**) of a push-pull of any kind. In that case, (**28**) will prevent unwanted locking/unlocking of the push-pull. Indeed, (**26**) and (**27**) can be, for instance, (**1**) and (**2**) of any kind of push-pull. Consequently, if the orientation of the motion of (**25**) is identical to the orientation of the actuation motion and if (**28**) is absent then, through friction, the motion of (**25**) can trigger a relative motion of (**1**) and (**2**) parallel to the actuation motion orientation thus potentially resulting in a unwanted locking/unlocking of the push-pull. Note that the issue is the same if (**27**) is a guide relatively to which (**1**) cannot slide parallel to the actuation motion. The sliding part (**25**) can be, for instance, (**3**) and/or (**4**). Figure 16 to Figure 22 are schematics of possible principles of such layered systems. They are all based on a linear actuation motion. However, as already mentioned above, the logic is the same for a rotational actuation motion. In all these figures, (**25**) slides parallel to the Y direction, the locking/unlocking motion is parallel to the X direction, the actuation motion is parallel to the Y direction and when the push-pull is locked (**1**) and (**2**) cannot move relatively to each others parallel to the Z direction. In Figure 16 (**28**) is an extension of or is attached to (**26**) and slides underneath (**27**) in the X direction. In Figure 17 (**28**) is not an extension of or attached to (**26**) and may or not slide underneath (**27**). The push-pulls is locked in Figure 16.a and Figure 17.a and unlocked in Figure 16.b and Figure 17.b. Figure 18 and Figure 19 are similar to, respectively, Figure 16 and Figure 17. The difference is that (**28**) has been shaped as a hook (**29**) so that when the push-pull is locked (**25**) is prevented to move parallel to the Z direction, i.e. a direction that is not parallel to both the actuation motion and the locking/unlocking motion directions. Figure 20 is similar to Figure 16 and Figure 21 and Figure 22 are similar to Figure 17. The difference is that the normals of the friction surfaces are parallel to the Z and X directions for, respectively, Figure 16 to Figure 19 and Figure 20 to Figure 22. Note that in Figure 20 to Figure 22 part (**28**) could have hooked shapes, similar to the ones described in Figure 18 and Figure 19. Figure 23 to Figure 30 are perspective views of examples of some of the principles illustrated in Figure 16 to Figure 22. In these figures the white and black circular arrows describe the rotation, respectively, of (**25**) when locked and of the actuation motion. The straight white arrows represent the relative motions of the parts when unlocked. Figure 23 to Figure 27 are examples of the principle described in Figure 17. Figure 28, Figure 29 and Figure 30 are examples of the principle described in, respectively, Figure 19, Figure 16 and Figure 22. The system described in Figure 23 involves a Restricted Linear Push-pull while the systems described in Figure 24 to Figure 27 and in Figure 28 to Figure 30 involve, respectively, parallel and perpendicular rotational push-pulls. Figure 23 to Figure 30 involves external guides only; although for Figure 25 the guiding could also be considered as internal since (**1**) slides along the rotating guide (**43**). The logic would be the same for mixed and or internal guides. All the systems described in Figure 24 to Figure 30 act primarily as pivots. Figure 24 and Figure 25 could be used as the hinge of a door, such as the pivoting doors of a shoe cabinet (e.g. see PCT/EP2012/059870 for more details on the shoe cabinet). Figure 26 to Figure 27 could be used, for instance, as a hidden hinge of a door, a panel, a lid or a handle etc... Figure 28 could be used to couple two pivoting poles of the same diameter. Figure 29 and Figure 30 could be used to attach parts (e.g. a pedal) on a crank. The system is unlocked in Figure 23.a and locked in Figure 23.b. Figure 24.a described the assembled and locked system. Figure 24.b and Figure 24.c represent the relative motion of the parts, before or after they are locked, from two different view points. For Figure 25, Figure 28, Figure 29 and Figure 30 sub-figures A, B, C and D describe, respectively, an exploded view of all the independent parts, the relative motion of the assembled parts relatively to each other and two cross sections of the system showing the motion of (**1**) and of (**25**) to go from a locked to an unlocked push-pull configuration. Note that in Figure 24 to Figure 30, but Figure 29, (**28**) can rotate relatively to (**25**) but not to (**26**), because of the protrusion (**30**) that penetrates the recess (**31**). Such a shaping of (**28**) and of (**26**) so that when the push-pull is locked the two parts are mechanically coupled is a typical way of preventing (**28**) to be dragged by friction by (**25**). Note that when (**25**) is also (**3**) then, (**1**) can but does not have to straddle (**3**) and (**4**) as long as (**28**) straddles (**3**) and (**4**); i.e. (**28**) becomes an extension of (**1**). Figure 29 is different because (**28**) and (**26**) are permanently coupled. Figure 29 is also a "Multi-parts system" (see below). The holes (**32**) in Figure 29 and Figure 30 are designed to receive additional magnets to keep (**1**) retracted when the push-pull are unlocked although springs could be used for the same effect. The strength of these additional magnets must be strong enough to keep (**1**) retracted but weak enough not to prevent (**1**) to be attracted by (**2**). In addition in Figure 24, (**28**) is only pushed by (**1**) (while it is pushed and pulled in Figure 23 and Figure 25) and the edge (**33**) on (**28**) has been introduced to prevent (**25**) to slide out when the system is locked. Such an edge is not mandatory and can be useless for some applications such as the hinges of the revolving door of a show cabinet (e.g. see PCT/EP2012/059870 for more details on the shoe cabinet). In some circumstances, it can be required to be able, on request, to mechanically couple (**25**) and (**27**) so that (**27**) moves with (**25**). Indeed, in Figure 24 and Figure 25, (**1**) is rotatable because one of its extremities is accessible (e.g. to a screwdriver). It is not the case for the system described in Figure 26 to Figure 27. This means that to unlock the push-pull, the relative rotation of (**1**) and (**2**) requires that (**25**) and (**1**) be mechanically coupled. The latter are mechanically coupled only when the coupling part (**35**) is inserted inside (**25**) and straddles (**25**) and groove (**34**). Figure 26.a describes all the part of the system. Figure 26.b shows the rotation of the hinge when the coupling part (**35**) has been inserted, i.e. when the push-pull is in the process of being unlocked. If (**35**) had not been inserted then part (**25**) could rotate freely without unlocking the push-pull. Figure 26.c illustrates the use of the hinge to attach a rotating panel, such as a door, to a frame. Figure 27 illustrates what happens inside (**25**) when (**35**) has been inserted. The coupling part (**35**) penetrates groove (**34**) located inside (**1**)/(**27**). When (**3**)/(**25**) rotates relatively to (**4**), (**35**) rotates with it and forces (**1**)/(**27**) to rotate inside (**28**) as described in Figure 27.a and Figure 27.b. Once fully rotated, (**1**)/(**27**) and (**28**) are pushed up by (**2**). The coupling part (**35**) can slide inside both groove (**34**) and cut (**36**) in order not to prevent (**1**)/(**27**) and (**28**) to fully slide out of (**4**) and, subsequently, to release the hinge.

Figure 31 and Figure 32 illustrate an alternative way to the multi-layered approach for parallel rotational push-pull. In both cases, (**1**) and (**2**) can rotate freely relatively to (**3**) and (**4**). However, when locked, (**1**) cannot rotate relatively to (**4**) because of the non circular (i.e. square in that case) sections of (**37**) and (**38**). Consequently, (**2**) must be able to rotate relatively to (**4**) to unlock the push-pull. The difference between these two figures is that (**37**) went through (**3**) during the locking process, while it did not in Figure 32. In both cases, when locked, (**3**) can rotate freely relatively to (**1**) without triggering the actuation motion by friction.

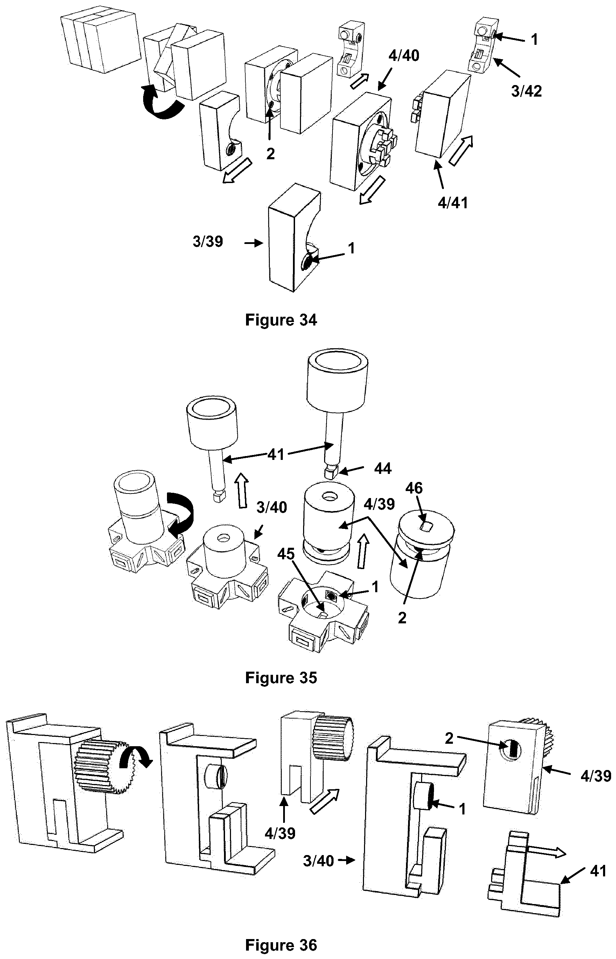

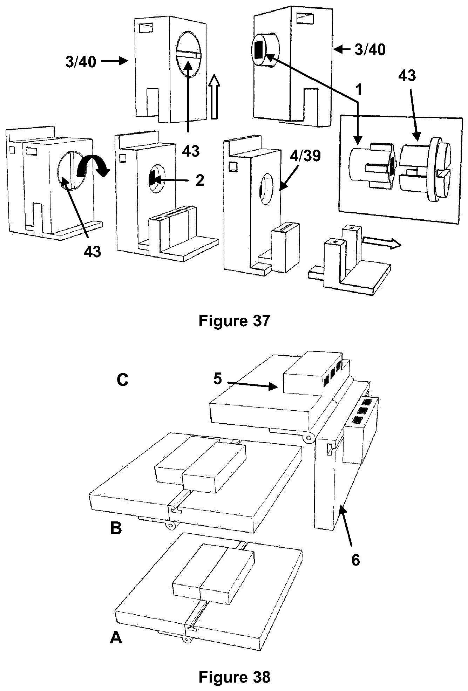

Hereafter, the tem "Multi-parts systems" designates a system where a first part (**39**) is used to block the relative motion of two other parts, (**40**) and (**41**), in some directions and (**39**) is connected to at least one of the other parts, say part (**40**), by a push-pull of any kind. A multi-part push-pull that involves more than 3 parts is equivalent to two or more 3-parts push-pulls that share at least one of their parts. Figure 33 to Figure 38 re perspective views of examples of such a multi-part system. They show the dynamic of the system required to unlock the systems and separate the parts. The parts are fully coupled on the left sub-figures and fully separated on the right one. The middle sub-figures show intermediate steps. In these figures the straight or circular black arrows describe the actuation motion. The straight white arrows represent the relative motions of the parts when unlocked. All Figure 33 to Figure 38 but Figure 34 involve 3 parts. Figure 34 involves 4 parts: (**39**), (**40**), (**41**) and (**42**). The first part (**39**) needs to move relatively to the other parts for the push-pull to unlock in all figures but Figure 36 and Figure 37 as, in these latter figures, (**1**) or (**2**) can rotate relatively to guides (**3**) and (**4**). As showed in the insert of Figure 37, (**1**) slides relatively to the rotating guide (**43**). Figure 33 and Figure 38 involve linear push-pulls. The push-pull is parallel rotational for Figure 34, Figure 36 and Figure 37. It is perpendicular-rotational for Figure 35. Note that in Figure 34 and Figure 35 the rotational axis does not go through (**1**). In all cases, the parts can be shaped and/or material with compression elasticity can be used to increase the frictions between the parts and reduce some free motion between the parts due to manufacturing tolerance between parts. In Figure 33 to Figure 35, when the push-pull is unlocked, (**1**) is either in the first (**39**) or second (**40**) part. This is arbitrary; it could have been the other way around. Extremity (**44**) slides in both non circular openings (**45**) and (**46**) during the locking or unlocking process. When locked openings (**45**) and (**46**) are oriented in such a way that extremity (**44**) could slide inside (**45**) but not (**46**); thus locking all three parts. Figure 38 is a perspective view of an example of a special case where the second and third parts are linked by a hinge.

Restricted linear push-pulls, multi-layers and multi-part push-pulls can use "hook longitudinal blocking" systems, "rail longitudinal blocking" systems, "perpendicular longitudinal blocking" systems and or be used by "multiple fixing surface" systems. Multiple fixing surface systems can use "hook longitudinal blocking" systems, "rail longitudinal blocking" systems, "perpendicular longitudinal blocking", Multi-layers and multi-part push-pulls. Sliding platforms can use "hook longitudinal blocking" systems, "rail longitudinal blocking" systems and/or "perpendicular longitudinal blocking systems".

## Claims

1. A mechanism for connecting and disconnecting two parts, the mechanism comprising:
a first component (4/26,100) having a first magnetic part (2, 101) for integration with or attachment to a first of said parts;
a second component (25, 102) for integration with or attachment to a second of said parts;
a third component (3/27, 103) having a second magnetic part (1, 106), the third component (3/27, 103) being moveable relative to said first component (4/26, 100) in a given direction to effect switching between connection and disconnection of the first and second components by causing magnetic interaction of the first and second magnetic parts to effect relative movement of those magnetic parts, wherein, when and while connected, the first and second components are able to move relative to one another in said given direction; and
**characterised by** further comprising a fourth component (28, 104) for engagement with said first component (4/26, 100) to prevent movement of the third component (3/27, 103) relative to the first component (4/26, 100) in said given direction as a result of relative movement of the first and second components in said given direction, thereby to prevent unintended disconnection of the first and second components.

2. A mechanism according to claim 1, wherein said given direction is a rotational direction.

3. A mechanism according to claim 1, wherein said given direction is a linear direction.

4. A mechanism according to any one of the preceding claims, wherein said first and second magnetic parts comprise oppositely oriented dipoles.

5. A mechanism according to claim 1 and comprising further a mechanical lock (107) for locking and unlocking the first and third components with respect to one another by said relative motion in the given direction.

6. A mechanism according to claim 1, wherein said fourth component is secured to said second component such that said second component can move relative to said fourth component in said given direction.

7. Apparatus comprising a first part and a second part, the first part being attachable to the second part at at least two fixing locations, the apparatus comprising a mechanism according to any one of the preceding claims in order to provide a fixing at one of said locations, wherein said first component (4/26, 100) is integral with or attached to the first part and said second component (25, 102) is integral with or attached to the second part.

## Patentansprüche

1. Mechanismus zum Verbinden und Trennen zweier Teile, wobei der Mechanismus Folgendes umfasst:
eine erste Komponente (4/26, 100), die einen ersten magnetischen Teil (2, 101) zur Integration mit oder Befestigung an einem ersten der Teile aufweist,
eine zweite Komponente (25, 102) zur Integration mit oder Befestigung an einem zweiten der Teile,
eine dritte Komponente (3/27, 103), die einen zweiten magnetischen Teil (1, 106) aufweist, wobei die dritte Komponente (3/27, 103) im Verhältnis zu der ersten Komponente (4/26, 100) in einer gegebenen Richtung beweglich ist, um einen Wechsel zwischen Verbindung und Trennung der ersten und der zweiten Komponente zu bewirken, durch Bewirken einer magnetischen Wechselwirkung des ersten und des zweiten magnetischen Teils, um eine relative Bewegung dieser magnetischen Teile zu bewirken, wobei, wenn und während sie verbunden sind, die erste und die zweite Komponente dazu in der Lage sind, sich im Verhältnis zueinander in der gegebenen Richtung zu bewegen; und
**dadurch gekennzeichnet, dass** er ferner eine vierte Komponente (28, 104) zum Eingriff mit der ersten Komponente (4/26, 100) umfasst, um eine Bewegung der dritten Komponente (3/27, 103) im Verhältnis zu der ersten Komponente (4/26, 100) in der gegebenen Richtung als ein Ergebnis einer relativen Bewegung der ersten und der zweiten Komponente in der gegebenen Richtung zu verhindern, um dadurch eine unbeabsichtigte Trennung der ersten und der zweiten Komponente zu verhindern.

2. Mechanismus nach Anspruch 1, wobei die gegebene Richtung eine Drehrichtung ist.

3. Mechanismus nach Anspruch 1, wobei die gegebene Richtung eine lineare Richtung ist.

4. Mechanismus nach einem der vorhergehenden Ansprüche, wobei der erste und der zweite magnetische Teil entgegengesetzt ausgerichtete Dipole umfassen.

5. Mechanismus nach Anspruch 1, und der ferner eine mechanische Verriegelung (107) zum Verriegeln und Entriegeln der ersten und der dritten Komponente in Bezug aufeinander durch die relative Bewegung in der gegebenen Richtung umfasst.

6. Mechanismus nach Anspruch 1, wobei die vierte Komponente derart an der zweiten Komponente befestigt ist, dass sich die zweite Komponente im Verhältnis zu der vierten Komponente in der gegebenen Richtung bewegen kann.

7. Vorrichtung, die einen ersten Teil und einen zweiten Teil umfasst, wobei der erste Teil an mindestens zwei Befestigungsstellen an dem zweiten Teil befestigt werden kann, wobei die Vorrichtung einen Mechanismus nach einem der vorhergehenden Ansprüche umfasst, um eine Befestigung an einer der Stellen zu gewährleisten, wobei die erste Komponente (4/26, 100) integral mit dem ersten Teil oder an demselben befestigt ist und die zweite Komponente (25, 102) integral mit dem zweiten Teil oder an demselben befestigt ist.

## Revendications

1. Mécanisme pour connecter et déconnecter deux parties, le mécanisme comprenant :
un premier composant (4/26, 100) comportant une première partie magnétique (2, 101) destinée à faire partie intégrante de ou à être fixée sur une première desdites pièces ;
un deuxième composant (25, 102) destiné à faire partie intégrante de ou à être fixé sur une deuxième desdites pièces ;
un troisième composant (3/27, 103) comportant une deuxième partie magnétique (1, 106), le troisième composant (3/27, 103) pouvant se déplacer par rapport audit premier composant (4/26, 100) dans une direction donnée pour effectuer une commutation entre la connexion et la déconnexion des premier et deuxième composants en provoquant une interaction magnétique des première et deuxième parties magnétiques, pour entraîner un déplacement relatif de ces parties magnétiques, dans lequel, lors et pendant la connexion, les premier et deuxième composants peuvent se déplacer l'un par rapport à l'autre dans ladite direction donnée ; et
**caractérisé en ce qu'**il comprend en outre un quatrième composant (28, 104) destiné à s'engager dans ledit premier composant (4/26, 100) pour empêcher le déplacement du troisième composant (3/27, 103) par rapport au premier composant (4/26, 100) dans ladite direction donnée par suite d'un déplacement relatif des premier et deuxième composants dans ladite direction donnée, pour empêcher ainsi une déconnexion involontaire des premier et deuxième composants.

2. Mécanisme selon la revendication 1, dans lequel ladite direction donnée est une direction de rotation.

3. Mécanisme selon la revendication 1, dans lequel ladite direction donnée est une direction linéaire.

4. Mécanisme selon l'une quelconque des revendications précédentes, dans lequel lesdites première et deuxième parties magnétiques comprennent des dipôles à orientations opposées.

5. Mécanisme selon la revendication 1, et comprenant en outre un verrou mécanique (107) pour verrouiller et déverrouiller les premier et troisième composants l'un par rapport à l'autre par suite dudit déplacement relatif dans la direction donnée.

6. Mécanisme selon la revendication 1, dans lequel ledit quatrième composant est fixé sur ledit deuxième composant, de sorte que ledit deuxième composant peut se déplacer par rapport audit quatrième composant dans ladite direction donnée.

7. Appareil, comprenant une première partie et une deuxième partie, la première partie pouvant être fixée sur la deuxième partie au niveau d'au moins deux emplacements de fixation, l'appareil comprenant un mécanisme selon l'une quelconque des revendications précédentes pour assurer une fixation au niveau de l'un desdits emplacements, dans lequel ledit premier composant (4/26, 100) fait partie intégrante de ou est fixé sur la première partie, et ledit deuxième composant (25, 102) fait partie intégrante ou est fixé sur la deuxième partie.
